# EUROPEAN PATENT SPECIFICATION

(11) **EP 3 199 893 B1**
(45) Date of publication and mention of the grant of the patent: **30.06.2021**
(21) Application number: 14902773.2
(22) Date of filing: 26.09.2014
(51) Int. Cl.: F24F 11/65, F24F 11/83, F25B 47/02, F24F 140/60, F25B 49/02

(54) **COMBINED AIR CONDITIONING AND REFRIGERATING INSTALLATION**
KOMBINATION AUS KLIMAANLAGE UND KÜHLANLAGE
INSTALLATION COMBINÉE DE CONDITIONNEMENT D'AIR ET DE RÉFRIGÉRATION

(43) Date of publication of application: 02.08.2017
(73) Proprietor: Mitsubishi Electric Corporation, Chiyoda-ku Tokyo 100-8310 (JP)
(72) Inventor: TORIYAMA, Kuniaki, Tokyo 100-8310 (JP); MAEDA, Migifumi, Tokyo 100-8310 (JP); NAKAMURA, Ataru, Tokyo 100-8310 (JP)
(74) Representative: Pfenning, Meinig & Partner mbB
(86) International application number: PCT/JP2014/075747
(87) International publication number: WO 2016/046991

(56) References cited:
- JP-A- H09 217 953
- JP-A- 2001 304 656
- JP-A- 2001 304 656
- JP-A- 2002 147 819
- JP-A- 2003 023 729
- JP-A- 2003 023 729
- JP-A- 2007 014 179
- JP-A- 2010 032 072
- JP-A- 2010 032 072
- JP-A- 2011 052 952
- JP-A- 2011 052 952
- None

## Description

### Technical Field

The present invention relates to an air-conditioning and refrigerating complex facility that cooperatively controls an air-conditioning apparatus and a refrigerating apparatus to control power consumption.

### Background Art

Conventionally, an air-conditioning and refrigerating complex facility in which an air-conditioning apparatus and a refrigerating device are provided together is known. Such an air-conditioning and refrigerating complex facility is installed in a food factory or a supermarket, etc. An air-conditioning and refrigerating complex facility is provided in which the air-conditioning apparatus and the refrigerating device are connected to each other via a transmission line, electric load amounts such as the power consumption and electric power consumption thereof are detected, and the air-conditioning apparatus and the refrigerating device are controlled such that the total power consumption of the electric load amounts thereof does not exceed target power (contract power) (see, e.g., Patent Literature 1).

Patent Literature 1 discloses a controller performing control of decreasing the operating frequency of a compressor of any one of an air-conditioning apparatus or a refrigerating device system, on the basis of the difference between the room temperature and a preset temperature in the air-conditioning apparatus or the difference between the temperature inside the refrigerating device system (inside temperature) and a preset temperature in the refrigerating device system. Thus, a peak value of the total electric power consumption of the air-conditioning apparatus and the refrigerating device system is reduced while preventing, as much as possible, adverse effect on articles within a cooling target space or provision of an uncomfortable feeling to a person within an air-conditioning target space. Patent Literature 2 discloses an apparatus for managing operation of refrigerating machines which controls defrosting of evaporators of refrigeration cycles and which obtains a total estimated power consumption in a case of a pull-down operation using power consumptions necessary for the pull down operation performed for the cooling/heating devices after defrosting is performed and using a power consumption of the store that includes at least the power consumptions of the refrigeration cycles and that is estimated for each of predetermined time periods. Patent Literature 3 discloses a power consumption control device which is capable of more positively suppressing peak of power consumption while suppressing deterioration of states in a plurality of loads. Patent Literature 4 discloses air-conditioning refrigeration combined facilities for saving expenses related to power by inhibiting the peak value of total used power of an air conditioner and a refrigerating machine. Patent Literature 5 discloses a power-saving controller and an energy-saving system which reduce overall power which is to be consumed in a plurality of power consuming apparatuses and achieve total energy savings.

### Citation List

### Patent Literature

Patent Literature 1: Japanese Unexamined Patent Application Publication No. 2001-304656
Patent Literature 2: JP 2011 052952 A
Patent Literature 3: JP 2010 032072 A
Patent Literature 4: JP 2001 304656 A
Patent Literature 5: JP 2003 023729 A

### Summary of Invention

### Technical Problem

The air-conditioning and refrigerating complex facility of Patent Literature 1 controls the power consumption such that the power consumption is not equal to or larger than contract power, in accordance with an operation state of the air-conditioning apparatus that depends on the temperature of the air-conditioning target space and an operation state of the refrigerating device that depends on the inside temperature. However, in addition to cooling the air-conditioning target space or the inside space, the air-conditioning apparatus and the refrigerating device perform operation in which power is consumed, such as defrosting operation. Thus, there is a demand for not exceeding a predetermined amount of power even when operation in which instantaneously consumed power is large, such as defrosting operation, is performed.

The present invention has been made to overcome the above-described problem, and an object of the present invention is to provide an air-conditioning and refrigerating complex facility that can prevent contract power from being exceeded, even when an operation content that entails large instantaneously consumed power is large is performed.

### Solution to Problem

An air-conditioning and refrigerating complex facility according to a first aspect of the present invention is defined in claim 1. An air-conditioning and refrigerating complex facility according to a second aspect of the present invention is defined in claim 6. Preferred embodiments are defined in the dependent claims.

### Advantageous Effects of Invention

Since the air-conditioning and refrigerating complex facility according to the present invention is is configured for performing the cooling operation of the refrigerating device before the peak time, and shifting the defrosting operation of the refrigerating device to a time before or after the peak time and performing the defrosting operation, it is possible to inhibit overlap of operating time of operation contents of which instantaneously consumed power is large, to prevent contract power from being exceeded.

### Brief Description of Drawings

[Fig. 1] Fig. 1 is a block diagram showing an example of an air-conditioning and refrigerating complex facility according to Embodiment of the present invention.
[Fig. 2] Fig. 2 is a graph showing conventional transition of an amount of power in a facility in which an air-conditioning apparatus and a refrigerating apparatus are installed.
[Fig. 3] Fig. 3 is a block diagram showing an example of an operation controller in the air-conditioning and refrigerating complex facility in Fig. 1.
[Fig. 4] Fig. 4 is a graph showing temporal transition of the operating frequency of an air-conditioning compressor in Fig. 1.
[Fig. 5] Fig. 5 is a graph showing temporal transition of the operating frequency of a compressor in a refrigeration and air-conditioning outdoor unit in Fig. 1.
[Fig. 6] Fig. 6 is a graph showing temporal transition of defrosting operation of a refrigerating apparatus in Fig. 1.
[Fig. 7] Fig. 7 is a graph showing a state of the operating frequency of an air-conditioning compressor, the defrosting operation of the refrigerating device, and the operating frequency of a refrigeration compressor.
[Fig. 8] Fig. 8 is a graph representing a relationship between temperature rise and a time in which a cooling target space to be cooled by each refrigerating device in Fig. 1 is not cooled.
[Fig. 9] Fig. 9 is a graph showing a state where cooling operation is performed by an operation controlling unit in Fig. 3 before a peak time.
[Fig. 10] Fig. 10 is a graph showing a state where a time of defrosting operation is shifted in the operation controlling unit in Fig. 3.
[Fig. 11] Fig. 11 is a graph showing a state where the operating frequency of the air-conditioning compressor is limited in the peak time.
[Fig. 12] Fig. 12 is a graph showing power consumption in the case where any one or more of cooling operation of refrigerating devices, shift control of the time of defrosting operation, and capacity-saving operation of the air-conditioning apparatus are performed.
[Fig. 13] Fig. 13 is a graph showing power consumption in the case where any one or more of the cooling operation of the refrigerating devices, the shift control of the time of defrosting operation, and the capacity-saving operation of the air-conditioning apparatus are executed over a plurality of days.
[Fig. 14] Fig. 14 is a flowchart showing an example of operation of the air-conditioning and refrigerating complex facility in Fig. 1.

### Description of Embodiments

### Embodiment

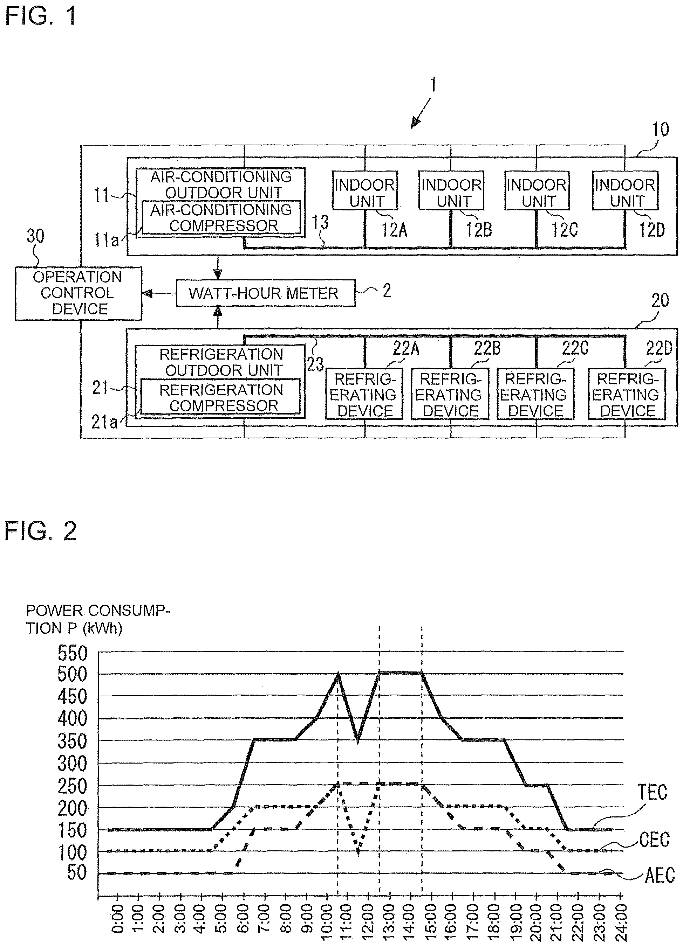

Hereinafter, Embodiment of the air-conditioning and refrigerating complex facility of the present invention will be described in detail with reference to the drawings. Fig. 1 is a schematic diagram showing an air-conditioning and refrigerating complex facility according to Embodiment of the present invention. The air-conditioning and refrigerating complex facility 1 in Fig. 1 is a system that is installed in a facility such as a food factory and in which an air-conditioning apparatus 10 and a refrigerating apparatus 20 are provided together, and includes the air-conditioning apparatus 10, the refrigerating apparatus 20, and an operation controller 30. In Fig. 1, a case where the air-conditioning and refrigerating complex facility 1 includes the single air-conditioning apparatus 10 and the single refrigerating apparatus 20, is shown. However, the air-conditioning and refrigerating complex facility 1 may include two or more air-conditioning apparatuses 10 and two or more refrigerating apparatuses 20.

The air-conditioning apparatus 10 performs air-conditioning of an air-conditioning target space and includes an air-conditioning outdoor unit 11 and a plurality of indoor units 12A to 12D. The air-conditioning outdoor unit 11 and the indoor units 12A to 12D are connected to each other by refrigerant pipes 13 to form a refrigerant circuit. By refrigerant circulating through the refrigerant circuit, air in the air-conditioning target space is heated or cooled to perform air-conditioning. The case where the air-conditioning apparatus 10 in Fig. 1 includes the one air-conditioning outdoor unit 11 and the four indoor units 12A to 12D is shown as an example. However, the number of units is not limited, and the air-conditioning apparatus 10 may include, for example, two or more air-conditioning outdoor units 11, and may include one or more indoor units 12A.

The refrigerating apparatus 20 is a low-temperature facility for cooling or refrigerating cooling targets to a temperature lower than the ambient temperature and includes a refrigeration outdoor unit 21 and refrigerating devices 22A to 22D. The refrigeration outdoor unit 21 and the refrigerating devices 22A to 22D are connected to each other by refrigerant pipes 23 to form a refrigerant circuit through which refrigerant circulates. Each of the refrigerating devices 22A to 22D cools air in a cooling target space to cool cooling targets such as food. The case where the refrigerating apparatus 20 in Fig. 1 includes the one refrigeration outdoor unit 21 and the four refrigerating devices 22A to 22D is shown as an example. However, the number of units or devices is not limited, the refrigerating apparatus 20 may include, for example, two or more refrigeration outdoor units 21 and include one or more refrigerating device 22A.

The operation controller 30 controls operation of the air-conditioning outdoor unit 11, the plurality of indoor units 12A to 12D, the refrigeration outdoor unit 21, and the plurality of refrigerating devices 22A to 22D. At this time, the operation controller 30 controls operation states of an air-conditioning compressor 11a of the air-conditioning outdoor unit 11 and a refrigeration compressor 21a of the refrigeration outdoor unit 21 such as increasing/decreasing the operating frequencies of the air-conditioning compressor 11a and the refrigeration compressor 21a or stopping the air-conditioning compressor 11a and the refrigeration compressor 21a. Furthermore, the operation controller 30 controls action in defrosting operation of the refrigerating devices 22A to 22D for the purpose of defrosting the refrigerating devices 22A to 22D. The defrosting operation is generally an operation in which heating is performed by a heater or another device to melt frost.

The power consumption by the air-conditioning apparatus 10 and the refrigerating apparatus 20 is measured by a watt-hour meter 2, and the operation controller 30 acquires the power consumption of the entire air-conditioning and refrigerating complex facility 1 measured by the watt-hour meter 2. The watt-hour meter 2 has a function to individually measure power consumption of each of the refrigeration outdoor unit 21, the refrigerating devices 22A to 22D, the air-conditioning outdoor unit 11, and the indoor units 12A to 12D, and the operation controller 30 may acquire the power consumption of each constituent device.

Here, Fig. 2 is a graph showing temporal transition of power consumption in a facility in which the air-conditioning apparatus and the refrigerating apparatus are installed. In Fig. 2, temporal transition of power consumption AEC of the air-conditioning apparatus 10, temporal transition of power consumption CEC of the refrigerating apparatus 20, and temporal transition of total power consumption TEC of the power consumption AEC and the power consumption CEC are shown. Normally, the above facility concludes a contract for power consumption with an electric power company, and a base rate is calculated on the basis of maximum demand power. Thus, it is necessary to reduce the maximum demand power. For example, in Fig. 2, in the case where the contract power is 400 kWh in amount of power, the power consumption of the air-conditioning apparatus 10 and power consumption of the refrigerating apparatus 20 simultaneously reach their peaks in the period of 10:00 to 11:00 and the period 12:00 to 16:00, and the power consumption of both is simply summed, so that the total power consumption exceeds the contract power, 400 kWh.

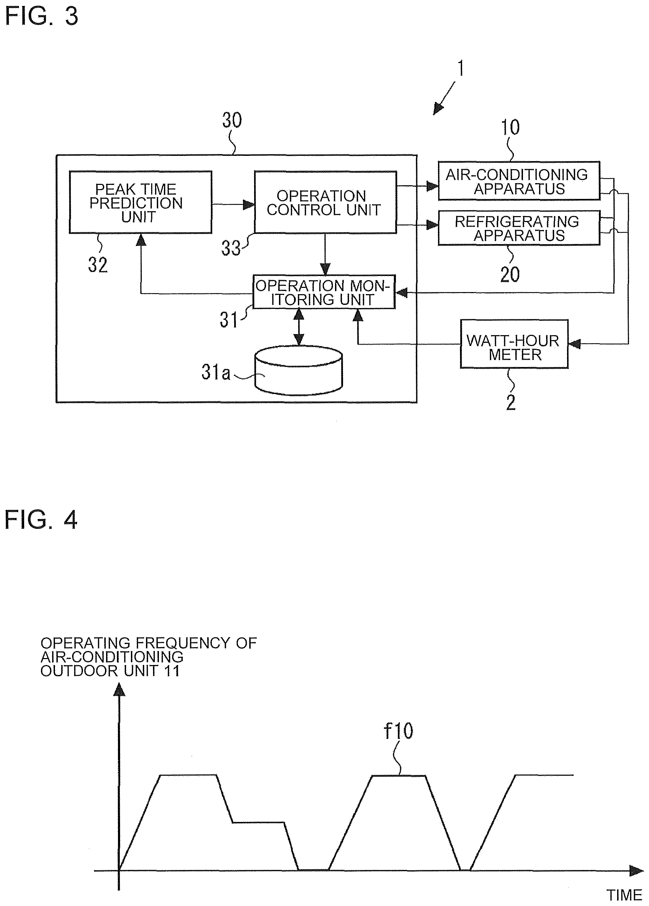

Thus, the operation controller 30 has a function to predict a peak time that is a time zone in which total power consumption is greater than a predetermined preset power value, from the past power consumption of the air-conditioning apparatus 10 and the refrigerating apparatus 20, and control operation of the air-conditioning apparatus 10 and the refrigerating apparatus 20 in c so as to reduce power consumption in the predicted peak time. Fig. 3 is a block diagram showing an example of the operation controller in the air-conditioning and refrigerating complex facility in Fig. 1. In Fig. 3, the operation controller 30 includes an operation monitoring unit 31, a peak prediction unit 32, and an operation controlling unit 33.

The operation monitoring unit 31 is configured to monitor the operation states of the air-conditioning apparatus 10 and the refrigerating apparatus 20 and stores the monitoring data in a storage unit 31a. The operation monitoring unit 31 has a function to acquire the power consumption of the air-conditioning apparatus 10 and the power consumption of the refrigerating apparatus 20. Specifically, for example, the operation monitoring unit 31 acquires the power consumption of the air-conditioning apparatus 10 and the refrigerating apparatus 20 measured by the watt-hour meter 2 as shown in Fig. 2.

Alternatively, the operation monitoring unit 31 may acquire power consumption from the operation states of the air-conditioning apparatus 10 and the refrigerating apparatus 20. For example, the operation monitoring unit 31 calculates the power consumption of each of the refrigeration outdoor unit 21, the refrigerating devices 22A to 22D, the air-conditioning outdoor unit 11, and the indoor units 12A to 12D from information such as operating time of each of the air-conditioning outdoor unit 11, the indoor units 12A to 12D, the refrigeration outdoor unit 21, and the refrigerating devices 22A to 22D, the differences between the room temperature/inside temperature and a preset temperature, the compressor frequencies, and information on defrosting operation (power consumption of preset defrosting operation, execution time of defrosting operation, etc.).

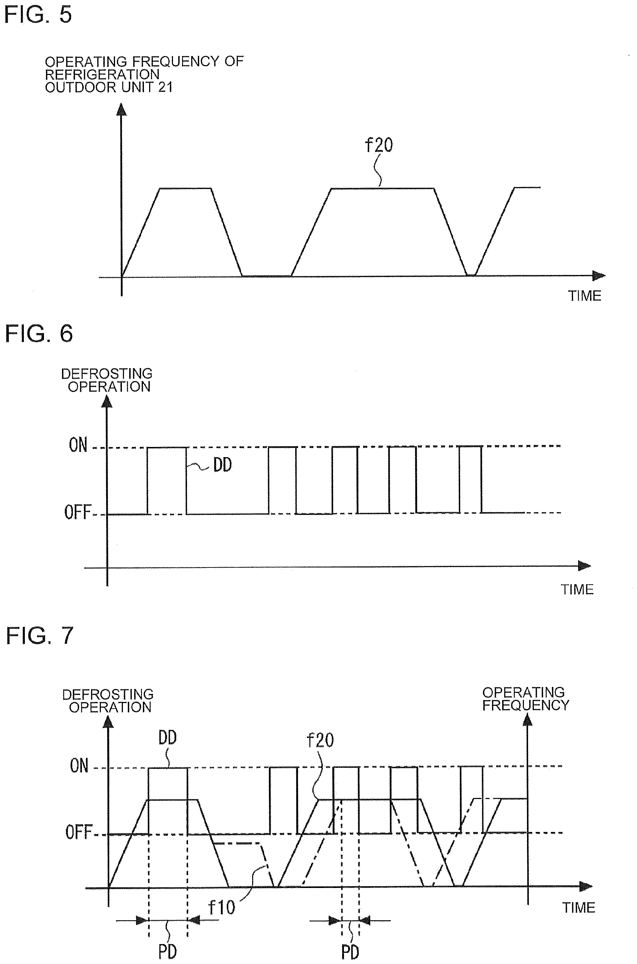

The operation monitoring unit 31 monitors the operation state of each device of the air-conditioning apparatus 10 and the refrigerating apparatus 20, and stores the monitoring data in the storage unit 31a. Fig. 4 is a graph showing temporal transition of the operating frequency of the air-conditioning compressor in Fig. 1. As shown in Fig. 4, the operating frequency f10 of the air-conditioning compressor 11a varies in response to an air conditioning load of the air-conditioning target space. Fig. 5 is a graph showing temporal transition of the operating frequency of the compressor in the refrigeration and air-conditioning outdoor unit in Fig. 1. As shown in Fig. 5, the operating frequency f20 of the refrigeration compressor 21a varies in response to an inside load.

Fig. 6 is a graph showing temporal transition of defrosting operation of the refrigerating apparatus in Fig. 1. Depending on the humidity in a cooling target space, frost generally deposits around a fan of the refrigerating apparatus 20. When frost deposits, the cooling efficiency decreases. Thus, it is necessary to periodically perform defrosting. Generally, defrosting operation is an operation that is performed by using a heat coil and in which heating by a heater or another device is periodically performed during a period DD to melt frost, and is an operation in which large power is consumed by the heater or the other device.

Generally, the power consumption of the air-conditioning apparatus 10 mainly depends on the operating frequency of the compressor in the air-conditioning outdoor unit 11. The power consumption of the refrigerating apparatus 20 mainly depends on the operating frequency of the compressor of the refrigeration outdoor unit 21 and the defrosting operation. Thus, the operation monitoring unit 31 calculates and acquires the power consumption of the entire system every hour from the operating frequency of the compressor in the air-conditioning outdoor unit 11, the operating frequency of the compressor of the refrigeration outdoor unit 21 in the refrigerating apparatus 20, and the state of the defrosting operation of the refrigerating apparatus 20.

The peak prediction unit 32 predicts a peak time in which the sum of the power consumption of the air-conditioning apparatus 10 and the power consumption of the refrigerating apparatus 20 that are acquired by the operation monitoring unit 31 is equal to or greater than a preset power value Pref. At this time, the peak prediction unit 32 may use the power consumption measured by the watt-hour meter 2 or may use the power consumption calculated by the operation monitoring unit 31. The preset power value is, for example, a value less than the contract power, and may be arbitrarily set by a user, or may be set to a value acquired by uniformly subtracting a value based on a predetermined rate from the contract power. For example, when the contract power is 500 kWh, the preset power value is set to 400 kWh, which is 90% of the contract power. Then, the peak prediction unit 32 predicts, as the peak time, a time in which the power consumption of the entire system acquired by combining the power consumption of the air-conditioning apparatus 10 and the power consumption of the refrigerating apparatus 20 is greater than the preset power value Pref and less than the contract power.

The peak prediction unit 32 predicts a peak time in which the power consumption of the entire system reaches peak power in the previous day. Specifically, the peak prediction unit 32 combines the power consumption of the air-conditioning apparatus 10 and the refrigerating apparatus 20 in the previous day, and predicts, as the peak time, a time in which the power consumption of the entire system is greater than the preset power value Pref and less than the contract power. Fig. 7 is a graph showing the operating frequency f10 of the air-conditioning compressor, the period DD of the defrosting operation of the refrigerating apparatus, and the operating frequency f20 of the refrigeration compressor. In particular, in the case of an operation state as shown in Fig. 7, the peak prediction unit 32 predicts a period in which three types of operation control overlap each other, as a peak time PD in which the power consumption is greater than the preset power value Pref. Or, when the power consumption of the entire system in the previous day transitions as shown in Fig. 2, the peak prediction unit 32 predicts, as a peak time in the present day, 10:00 to 11:00 and 12:00 to 16:00 in which the power consumption is equal to or greater than the preset power value (e.g., 400 kWh).

The configuration in which the peak prediction unit 32 predicts a peak time in the present day by using the power consumption in the previous day or the operation states, has been described. However, the peak prediction unit 32 may predict a peak time by using the average of past data of the last one or more past days (e.g., the last one week) per hour, or the average per hour.

The operation controlling unit 33 in Fig. 3 executes any of three types of operation control comprising the defrosting operation of the refrigerating apparatus 20, cooling operation of the refrigerating apparatus 20, or operation of decreasing the operating frequency of the air-conditioning compressor 11a, in the peak time predicted by the peak prediction unit 32. At this time, the operation controlling unit 33 controls the air-conditioning apparatus 10 and the refrigerating apparatus 20 such that the total power consumption of the air-conditioning apparatus 10 and the refrigerating apparatus 20 is less than the preset power value Pref, thereby preventing the power consumption of the entire system from exceeding the contract power. Hereinafter, the defrosting operation of the refrigerating apparatus 20, the cooling operation of the refrigerating apparatus 20, and the operation of decreasing the operating frequency of the air-conditioning compressor 11a will be described in detail.

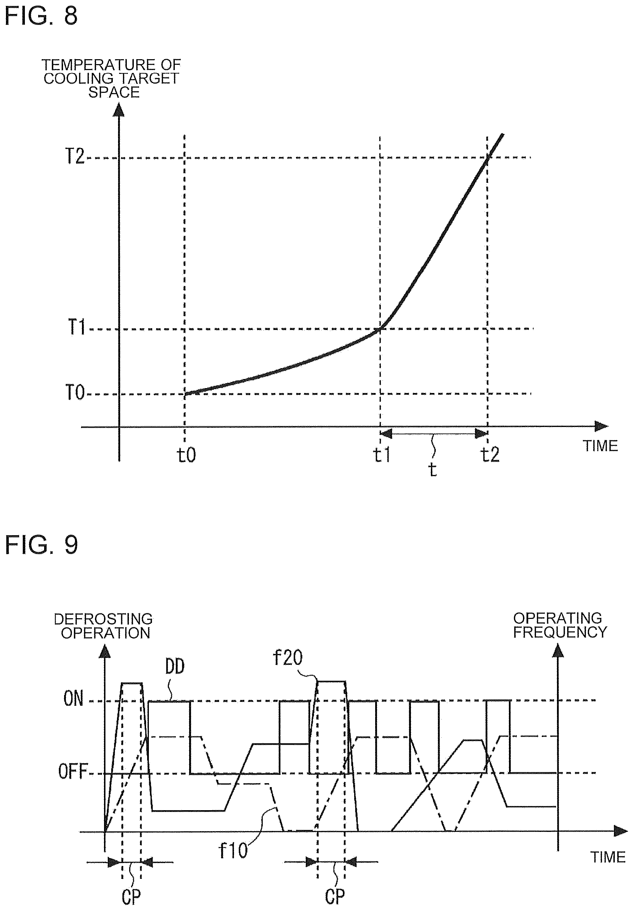

First, the cooling operation means operation of cooling a cooling target space to a temperature lower than an ordinary target temperature, before the peak time, such that the temperature of the cooling target space is maintained at an upper limit temperature or lower even without performing cooling during the peak time. Fig. 8 is a graph representing a relationship between temperature rise and time in which a cooling target space to be cooled by each refrigerating device in Fig. 1 is not cooled. In Fig. 8, T0 indicates a target temperature during cooling operation, T1 indicates a target temperature for the cooling target space during normal operation, and T2 indicates an upper limit temperature permitted for ensuring qualities of cooling targets. In the cooling operation, the operation controlling unit 33 controls the refrigerating apparatus 20 so as to perform cooling operation in which the target temperature T0 during cooling operation is set to, for example, a temperature acquired by subtracting 5 degrees C from the preset temperature T1 during normal operation. Then, after the cooling operation stops, the temperature in the cooling target space gradually increases and reaches the above upper limit temperature T2 in a reach time t (e.g., 15 minutes).

Fig. 9 is a graph showing a state where cooling operation is performed by the operation controller in Fig. 3 before the peak time. As shown in Fig. 9, in a cooling period CP before the predicted peak time is reached, the operation controlling unit 33 controls the operating frequency f20 of the refrigeration compressor 21a to cool the cooling target space until the temperature in each of the cooling target spaces within the refrigerating devices 22A to 22D becomes the target temperature T0 during cooling operation. Then, the operation controlling unit 33 controls the refrigerating apparatus 20 so as to stop cooling operation when the target temperature T0 is reached. When the upper limit temperature T2 is reached after elapse of the peak time, the operation controlling unit 33 controls the refrigerating apparatus 20 to restart normal cooling operation.

At this time, the target temperature T0 during cooling operation may be set such that an operation time of defrosting operation is longer than the reach time t. For example, when the operation time of defrosting operation is 10 minutes, the target temperature T0 during cooling operation is set such that the reach time t > 10 minutes. Then, by performing cooling operation before defrosting operation, cooling operation is prevented from being performed during defrosting operation.

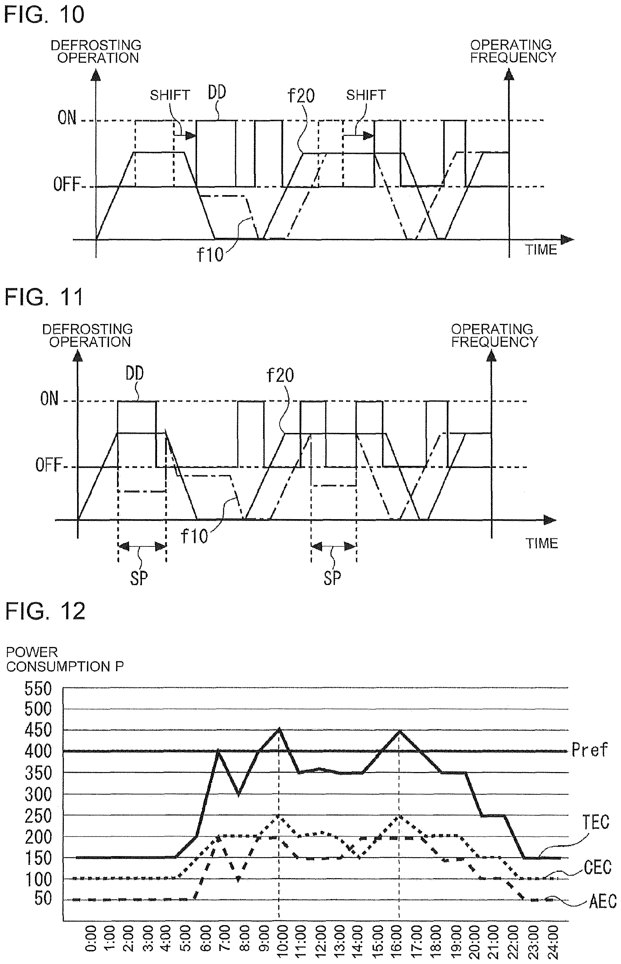

Next, shift of time of defrosting operation will be described. Fig. 10 is a graph showing a state where the period DD of defrosting operation is shifted by the operation controller in Fig. 3. As shown in Fig. 10, when the operation controlling unit 33 determines that the period DD of defrosting operation overlaps the peak time, the operation controlling unit 33 performs control so as to shift the period DD in which defrosting operation is performed, to a time before or after the peak time, such that the period DD of defrosting operation does not overlap the peak time. At this time, the operation controlling unit 33 derives a time to which the period DD is shifted such that the peaks of the operating frequencies of the air-conditioning compressor 11a and the refrigeration compressor 21a do not overlap each other, and performs control such that defrosting operation is performed.

In particular, the operation controlling unit 33 performs control such that cooling operation is executed before the peak time and defrosting operation is executed after the peak time. Thus, it is possible to distribute power consumption before and after the peak time to reduce a possibility of exceeding the contract power, while reducing a possibility of the inside temperatures of the refrigerating devices 22A to 22D exceeding the upper limit temperature T2 in the peak time.

Next, control of limiting the operating frequency of the air-conditioning compressor will be described. Fig. 11 is a graph showing a state where the operating frequency of the air-conditioning compressor is limited in the peak time. As shown in Fig. 11, the operation controlling unit 33 executes operating frequency limitation (capacity saving) on the air-conditioning compressor 11a in the peak time. At this time, for example, the operation controlling unit 33 performs control so as to operate the air-conditioning compressor 11a with the operating frequency of the air-conditioning compressor 11a in the previous day being decreased by a predetermined rate (e.g., 30%). Accordingly, the power consumption of the entire system is reduced.

Fig. 12 is a graph showing power consumption in the case where any one of cooling operation of the refrigerating devices, shift control of the time of defrosting operation, and capacity-saving operation of the air-conditioning apparatus. In the peak time predicted by the peak prediction unit 32, the operation controlling unit 33 in Fig. 3 executes any of three types of operation control of the defrosting operation of the refrigerating apparatus 20, the cooling operation of the refrigerating apparatus 20, and the operation of decreasing the operating frequency of the air-conditioning compressor 11a. Accordingly, as shown in Fig. 12, even in the peak time of power consumption, it is possible to reduce the peak value of power consumption.

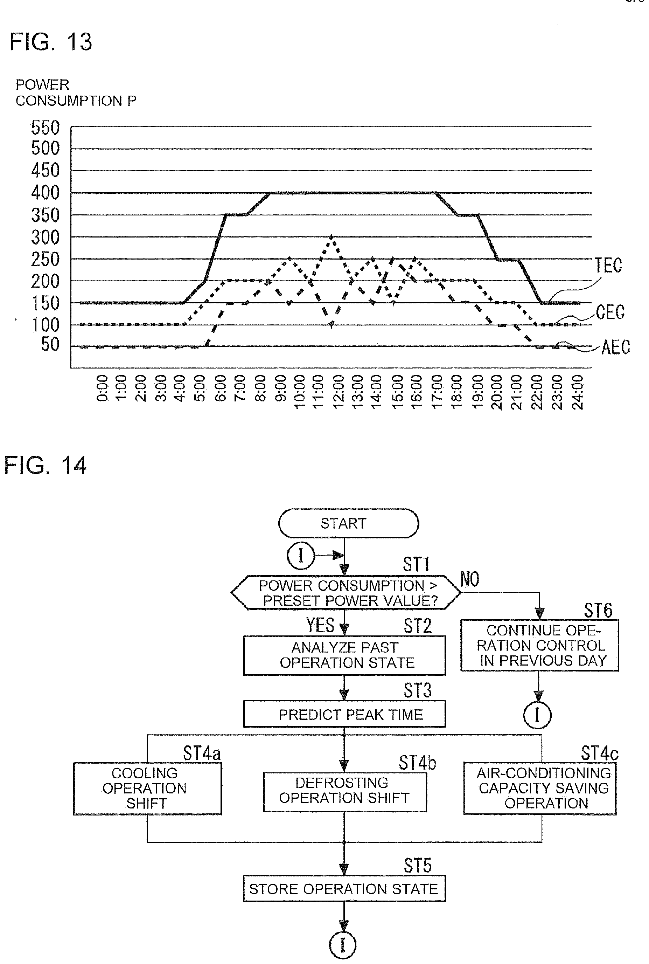

Regarding the power consumption of the entire system shown in Fig. 12, there is a period of exceeding the preset power value. When performing operation control in the next day, the operation controlling unit 33 performs the above three types of control again on the basis of the power amount acquiring result shown in Fig. 12. As described above, the operation controlling unit 33 executes the three types of control every day until the sum of the low-temperature power amount and the air-conditioning power amount in one day does not exceed the preset power value. Fig. 13 is a graph showing power consumption in the case where any one or more of cooling operation of the refrigerating devices, shift control of the time of defrosting operation, capacity-saving operation of the air-conditioning apparatus are executed over a plurality of days. By repeating the above three types of operation control a plurality of times, the power consumption of the entire system falls within the preset power value Pref as shown in Fig. 13.

Figs. 9 to 11 each show the case where the operation controlling unit 33 executes any one of the above three types of operation control, but the operation controlling unit 33 may execute two or all of the three types of operation control. In addition, the operation controlling unit 33 preferably performs the above three types of operation control in priority order of decreasing the operating frequency of the air-conditioning compressor 11a, defrosting operation, and cooling operation. Furthermore, the operation controlling unit 33 is not limited to the case with prioritizing, and whether to perform cooling operation, whether to shift defrosting operation, or whether to decrease the operating frequency of the air-conditioning compressor 11a may be arbitrarily set by the user.

Furthermore, in the peak time, when the frequency of the air-conditioning compressor 11a is decreased and the room temperature becomes higher than a room-temperature preset temperature, the operation controlling unit 33 may perform control so as to increase the operating frequency of the compressor of the air-conditioning outdoor unit 11 and so as to perform the defrosting operation of the refrigerating apparatus 20 after the peak time. Thus, it is possible to inhibit an instantaneous increase in power consumption in the peak time while inhibiting uncomfortable feeling of persons in the air-conditioning target space as much as possible.

In addition, in the case of shifting each of defrosting operation and cooling operation to a time before the peak time, the operation controlling unit 33 may execute defrosting operation before cooling operation, and may execute cooling operation after defrosting. Accordingly, since the cooling target space is cooled after defrosting, it is possible to efficiently perform cooling operation.

Furthermore, the refrigerating apparatus 20 may include an inside temperature detection unit that detects the temperature inside the refrigerating apparatus 20 in which cooling targets are cooled, and while the frequency of the air-conditioning compressor 11a is decreased in the peak time, when the temperature inside the refrigerating devices 22A to 22D becomes equal to or higher than a preset inside temperature, the operation controlling unit 33 may perform control so as to further decrease the frequency of the compressor of the air-conditioning outdoor unit 11 and increase the frequency of the compressor of the refrigeration outdoor unit 21. Accordingly, it is possible to prevent degradation of the qualities of the cooling targets stored inside the refrigerating devices 22A to 22D.

Fig. 14 is a flowchart showing an example of operation of the air-conditioning and refrigerating complex facility in Fig. 1. The example of operation of the air-conditioning and refrigerating complex facility 1 will be described with reference to Figs. 1 to 14. First, it is determined whether the power consumption is greater than the preset power value Pref (step ST1). When the power consumption is greater than the preset power value Pref (YES in step ST1), the past operation states of the operation monitoring unit 31 and the peak prediction unit 32 are analyzed (step ST2), and a peak time of the power consumption of the entire system is predicted (step ST3). Thereafter, the operation controlling unit 33 performs any one or more types of operation control of cooling control (step ST4a), time shift of defrosting operation (step ST4b), and capacity saving of the air-conditioning apparatus 10 (step ST4c) on the basis of the peak time. With this configuration, it is possible to prevent the power consumption of the entire system from exceeding the contract power.

Thereafter, the operation monitoring unit 31 stores the power consumption in the present day, into the storage unit 31a, and utilizes the stored power consumption as data for operation control in the next day (step ST5). Then, in the next day, when the power consumption is equal to or less than the preset power value Pref, the operation monitoring unit 31 determines that the present state is an optimum operation control state, and continues the control contents in the previous day (step ST6). On the other hand, even in the next day, when the power consumption is greater than the preset power value Pref, analysis of the operation states (step ST2) and prediction of the peak time are performed (steps ST2 and ST3), and any one of the three types of operation control is performed (steps ST4a to ST4c).

According to Embodiment described above, the operation controller 30 predicts peak power on the basis of the past operation states of the air-conditioning apparatus 10 and the refrigerating apparatus 20, and performs any one or more of performing the operation of decreasing the operating frequency of the air-conditioning compressor 11a in the peak time, performing cooling operation of the refrigerating devices 22A to 22D before the peak time, and shifting defrosting operation of the refrigerating devices 22A to 22D to a time before or after the peak time and performing the defrosting operation. Thus, it is possible to inhibit overlap of operating time of operation contents of which instantaneously consumed power is large, so that the user is allowed to comply with the contract power.

In addition, when the operation controlling unit 33 performs control in priority order of performing the operation of decreasing the operating frequency of the air-conditioning compressor 11a, shifting the defrosting operation of the refrigerating devices 22A to 22D to a time before or after the peak time and performing the defrosting operation, and performing the cooling operation of the refrigerating devices 22A to 22D before the peak time, it is possible to inhibit uncomfortable feeling in the air-conditioning target space as much as possible while inhibiting a decrease in the qualities of the cooling targets housed within the refrigerating devices 22A to 22D, so that it is possible to reduce the power consumption.

Furthermore, in the case where the operation controlling unit 33 decreases the operating frequency of the air-conditioning compressor 11a in the peak time, and increases the operating frequency of the air-conditioning compressor 11a and performs the defrosting operation of the refrigerating devices 22A to 22D after the peak time when the room temperature of the air-conditioning target space becomes higher than the preset temperature, it is possible to reduce the power consumption while inhibiting uncomfortable feeling in the air-conditioning target space as much as possible.

In addition, in the case where the operation controlling unit 33 performs control so as to execute defrosting operation after the peak time and execute cooling operation before the peak time, it is possible to reduce the power consumption while assuredly inhibiting a decrease in the qualities of the cooling targets in the peak time.

Furthermore, in the case where the operation controlling unit 33 performs control so as to further decrease the operating frequency of the air-conditioning compressor 11a and increase the operating frequency of the refrigeration compressor 21a when the temperature inside the refrigerating devices 22A to 22D becomes equal to or higher than the preset inside temperature while the operation controlling unit 33 decreases the frequency of the air-conditioning compressor 11a in the peak time, it is possible to reduce the power consumption while assuredly inhibiting a decrease in the qualities of the cooling targets.

Embodiment of the present invention is not limited to Embodiment described above. For example, one or more of the three types of operation control only need to be executed, but the peak prediction unit 32 may predict not only the peak time but also peak power that is power consumption in the peak time. Then, the operation controlling unit 33 may determine a number of types of operation control, among the three types of operation controls, on the basis of the magnitude of the predicted peak power. For example, in the case where a plurality of preset power values are set, when the peak power is greater than the highest preset power value among the preset power values, the operation controlling unit 33 may execute all the three types of operation control; when the peak power is greater than the second highest preset power value, the operation controlling unit 33 may execute two of the three types of operation control; and when the peak power is greater than the lowest preset power value, the operation controlling unit 33 may execute one of the three types of operation control. Accordingly, it is possible to assuredly inhibit overlap of operating time of operation contents of which instantaneously consumed power is large.

In Embodiment described above, since defrosting operation is performed by a plurality of the refrigerating devices 22A to 22D, the operation controlling unit 33 may perform control so as to shift a time of defrosting operation for each of the plurality of the refrigerating devices 22A to 22D. Similarly, the operation controlling unit 33 may perform control so as to shift a time of cooling operation for each of the plurality of the refrigerating devices 22A to 22D like the time of the defrosting operation.

### Reference Signs List

1 air-conditioning and refrigerating complex facility 2 watt-hour meter 10 air-conditioning apparatus 11 air-conditioning outdoor unit 11a air-conditioning compressor 12A to 12D indoor unit 13 refrigerant pipe 20 refrigerating apparatus 21 refrigeration outdoor unit 21a refrigeration compressor 22A to 22D refrigerating devices 23 refrigerant pipe 30 operation controller 31 operation monitoring unit 31a storage unit 32 peak prediction unit 33 operation controller 40 operation controller AEC power consumption CEC power consumption CP cooling period DD operating period f10 operating frequency of air-conditioning compressor f20 operating frequency of refrigeration compressor PD peak time Pref preset power value t reach time T0 target temperature T1 preset temperature T2 upper limit temperature TEC power consumption

## Claims

1. An air-conditioning and refrigerating complex facility comprising:
an air-conditioning apparatus (10) including an air-conditioning outdoor unit (11) including an air-conditioning compressor (11a), and an indoor unit (12A) connected to the air-conditioning outdoor unit (11) via a pipe (13) and configured to perform air-conditioning of an air-conditioning target space;
a refrigerating apparatus (20) including a refrigeration outdoor unit (21) including a refrigeration compressor (21a), and a refrigerating device (22A) connected to the refrigeration outdoor unit (21) via a pipe (23) and configured to cool a cooling target; and
an operation controller (30) configured to control operation of the air-conditioning apparatus (10) and the refrigerating apparatus (20),
the operation controller (30) including
an operation monitoring unit (31) configured to acquire power consumption of the air-conditioning apparatus (10) and power consumption of the refrigerating apparatus (20),
a peak prediction unit (32) configured to predict a peak time in which a sum of the power consumption of the air-conditioning apparatus (10) and the power consumption of the refrigerating apparatus (20) is maximum, and peak power consumption, the power consumption of the air-conditioning apparatus (10) and the power consumption of the refrigerating apparatus (20) being acquired by the operation monitoring unit (31),
an operation controlling unit (33),
**characterized in that** the operation controlling unit (33) is configured to control the refrigerating apparatus (20) to perform cooling operation of the refrigerating device (22A) before the peak time predicted by the peak prediction unit (32), and perform defrosting operation of the refrigerating device (22A) at a time before the peak time and before the cooling operation.

2. The air-conditioning and refrigerating complex facility of claim 1, wherein the operation controlling unit (33) is configured to decrease the operating frequency of the air-conditioning compressor (11a) in the peak time, and perform control in priority order of performing operation of decreasing the operating frequency of the air-conditioning compressor (11a), shifting the defrosting operation of the refrigerating device (22A) to a time before the peak time and performing the defrosting operation, and performing cooling operation of the refrigerating device (22A) before the peak time.

3. The air-conditioning and refrigerating complex facility of any one of claims 1 or 2, wherein the peak prediction unit (32) is configured to predict the peak time in a present day from the power consumption of the air-conditioning apparatus (10) and the power consumption of the refrigerating apparatus (20) in a previous day.

4. The air-conditioning and refrigerating complex facility of any one of claims 1 to 3, further comprising a watt-hour meter (2) configured to measure the power consumption of the air-conditioning apparatus (10) and the power consumption of the refrigerating apparatus (20), the operation monitoring unit (31) being configured to acquire the power consumption of the air-conditioning apparatus (10) and the power consumption of the refrigerating apparatus (20) from the power consumption measured by the watt-hour meter (2).

5. The air-conditioning and refrigerating complex facility of any one of claims 1 to 3, wherein the operation monitoring unit (31) is configured to acquire the power consumption from operation states of the air-conditioning apparatus (10) and the refrigerating apparatus (20).

6. An air-conditioning and refrigerating complex facility comprising: an air-conditioning apparatus (10) including an air-conditioning outdoor unit (11) including an air-conditioning compressor (11a), and an indoor unit (12A) connected to the air-conditioning outdoor unit (11) via a pipe (13) and configured to perform air-conditioning of an air-conditioning target space;
a refrigerating apparatus (20) including a refrigeration outdoor unit (21) including a refrigeration compressor (21a), and a refrigerating device (22A) connected to the refrigeration outdoor unit (21) via a pipe (23) and configured to cool a cooling target; and an operation controller (30) configured to control operation of the air-conditioning apparatus (10) and the refrigerating apparatus (20), the operation controller (30) including
an operation monitoring unit (31) configured to acquire power consumption of the air-conditioning apparatus (10) and power consumption of the refrigerating apparatus (20),
a peak prediction unit (32) configured to predict a peak time in which a sum of the power consumption of the air-conditioning apparatus (10) and the power consumption of the refrigerating apparatus (20) is maximum, and peak power consumption, the power consumption of the air-conditioning apparatus (10) and the power consumption of the refrigerating apparatus (20) being acquired by the operation monitoring unit (31), and
an operation controlling unit (33),
**characterized in that** the operation controlling unit (33) is configured to control the refrigerating apparatus (20) to
perform cooling operation of the refrigerating device (22A) before the peak time predicted by the peak prediction unit (32), and
perform defrosting operation of the refrigerating device (22A) at a time after the peak time.

## Patentansprüche

1. Luftkonditionierungs-und-Kühlungs-Komplex-Anlage, umfassend:
eine Luftkonditionierungsvorrichtung (10), aufweisend eine Luftkonditionierungsaußeneinheit (11), enthaltend einen Luftkonditionierungsverdichter (11a), und eine Inneneinheit (12A), die mit der Luftkonditionierungsaußeneinheit (11) über eine Leitung (13) verbunden ist und eingerichtet ist, eine Klimatisierung eines Klimatisierungszielraums durchzuführen;
eine Kühlungsvorrichtung (20), aufweisend eine Kühlungsaußeneinheit (21), enthaltend einen Kühlungsverdichter (21a), und eine Kühlungseinrichtung (22A), die über eine Leitung (23) mit der Kühlungsaußeneinheit (21) verbunden ist und eingerichtet ist, ein Kühlungsziel zu kühlen; und
eine Betriebssteuerungseinheit (30), die eingerichtet ist, einen Betrieb der Luftkonditionierungsvorrichtung (10) und der Kühlungsvorrichtung (20) zu steuern,
wobei die Betriebssteuerungseinheit (30) aufweist:
eine Betriebsüberwachungseinheit (31), die eingerichtet ist, einen Energieverbrauch der Luftkonditionierungsvorrichtung (10) und einen Energieverbrauch der Kühlungsvorrichtung (20) zu erwerben,
eine Spitze-Vorhersageeinheit (32), die eingerichtet ist, eine Spitzenzeit, in der eine Summe des Energieverbrauchs der Luftkonditionierungsvorrichtung (10) und des Energieverbrauchs der Kühlungsvorrichtung (20) maximal ist, und einen Spitzenenergieverbrauch, vorherzusagen, wobei der Energieverbrauch der Luftkonditionierungsvorrichtung (10) und der Energieverbrauch der Kühlungsvorrichtung (20) durch die Betriebsüberwachungseinheit (31) erworben werden,
eine Betriebssteuerungseinheit (33),
**dadurch gekennzeichnet, dass** die Betriebssteuerungseinheit (33) eingerichtet ist, die Kühlungsvorrichtung (20) zu steuern, um einen Kühlungsbetrieb der Kühlungseinrichtung (22A) vor der Spitzenzeit, die von der Spitze-Vorhersageeinheit (32) vorhergesagt ist, durchzuführen, und einen Entfrostungsbetrieb der Kühlungseinrichtung (22A) zu einer Zeit vor der Spitzenzeit und vor dem Kühlungsbetrieb durchzuführen.

2. Luftkonditionierungs-und-Kühlungs-Komplex-Anlage nach Anspruch 1, wobei die Betriebssteuerungseinheit (33) eingerichtet ist:
die Betriebsfrequenz des Luftkonditionierungsverdichters (11a) in der Spitzenzeit zu verringern, und
eine Steuerung in der Prioritätsreihenfolge durchzuführen: Durchführen des Betriebs der Verringerung der Betriebsfrequenz des Luftkonditionierungsverdichters (11a),
Verschieben des Entfrostungsbetriebs der Kühlungseinrichtung (22A) auf eine Zeit vor der Spitzenzeit und Durchführen des Entfrostungsbetriebs, und
Durchführen eines Kühlungsbetriebs der Kühlungseinrichtung (22A) vor der Spitzenzeit.

3. Luftkonditionierungs-und-Kühlungs-Komplex-Anlage nach einem der Ansprüche 1 oder 2, wobei die Spitze-Vorhersageeinheit (32) eingerichtet ist,
die Spitzenzeit an einem aktuellen Tag aus dem Energieverbrauch der Luftkonditionierungsvorrichtung (10) und dem Energieverbrauch der Kühlungsvorrichtung (20) an einem vorherigen Tag vorherzusagen.

4. Luftkonditionierungs-und-Kühlungs-Komplex-Anlage nach einem der Ansprüche 1 bis 3, ferner umfassend einen Wattstundenzähler (2), der eingerichtet ist, den Energieverbrauch der Luftkonditionierungsvorrichtung (10) und den Energieverbrauch der Kühlungsvorrichtung (20) zu messen, wobei die Betriebsüberwachungseinheit (31) eingerichtet ist, den Energieverbrauch der Luftkonditionierungsvorrichtung (10) und den Energieverbrauch der Kühlungsvorrichtung (20) aus dem durch den Wattstundenzähler (2) gemessenen Energieverbrauch zu erwerben.

5. Luftkonditionierungs-und-Kühlungs-Komplex-Anlage nach einem der Ansprüche 1 bis 3, wobei die Betriebsüberwachungseinheit (31) eingerichtet ist,
den Energieverbrauch aus Betriebszuständen der Luftkonditionierungsvorrichtung (10) und der Kühlungsvorrichtung (20) zu erwerben.

6. Luftkonditionierungs-und-Kühlungs-Komplex-Anlage, umfassend:
eine Luftkonditionierungsvorrichtung (10), aufweisend eine Luftkonditionierungsaußeneinheit (11), enthaltend einen Luftkonditionierungsverdichter (11a), und eine Inneneinheit (12A), die mit der Luftkonditionierungsaußeneinheit (11) über eine Leitung (13) verbunden ist und eingerichtet ist, eine Klimatisierung eines Klimatisierungszielraums durchzuführen;
eine Kühlungsvorrichtung (20), aufweisend eine Kühlungsaußeneinheit (21), enthaltend einen Kühlungsverdichter (21a), und eine Kühlungseinrichtung (22A), die über eine Leitung (23) mit der Kühlungsaußeneinheit (21) verbunden ist und eingerichtet ist, ein Kühlungsziel zu kühlen; und
eine Betriebssteuerungseinheit (30), die eingerichtet ist, einen Betrieb der Luftkonditionierungsvorrichtung (10) und der Kühlungsvorrichtung (20) zu steuern, wobei die Betriebssteuerungseinheit (30) aufweist:
eine Betriebsüberwachungseinheit (31), die eingerichtet ist, einen Energieverbrauch der Luftkonditionierungsvorrichtung (10) und einen Energieverbrauch der Kühlungsvorrichtung (20) zu erwerben,
eine Spitze-Vorhersageeinheit (32), die eingerichtet ist, eine Spitzenzeit, in der eine Summe des Energieverbrauchs der Luftkonditionierungsvorrichtung (10) und des Energieverbrauchs der Kühlungsvorrichtung (20) maximal ist, und den Spitzenenergieverbrauch, vorherzusagen, wobei der Energieverbrauch der Luftkonditionierungsvorrichtung (10) und der Energieverbrauch der Kühlungsvorrichtung (20) durch die Betriebsüberwachungseinheit (31) erworben werden, und
eine Betriebssteuerungseinheit (33),
**dadurch gekennzeichnet, dass** die Betriebssteuerungseinheit (33) eingerichtet ist, die Kühlungsvorrichtung (20) zu steuern, um
einen Kühlungsbetrieb der Kühlungseinrichtung (22A) vor der durch die Spitze-Vorhersageeinheit (32) vorhergesagten Spitzenzeit durchzuführen, und
einen Entfrostungsbetrieb der Kühlungseinrichtung (22A) zu einem Zeitpunkt nach der Spitzenzeit durchzuführen.

## Revendications

1. Installation de complexe de climatisation et réfrigération comprenant :
un appareil de climatisation (10) comprenant une unité extérieure de climatisation (11) comprenant un compresseur de climatisation (11a), et une unité intérieure (12A) raccordée à l'unité extérieure de climatisation (11) par l'intermédiaire d'un tuyau (13) et configurée pour réaliser une climatisation d'un espace cible de climatisation ;
un appareil de réfrigération (20) comprenant une unité extérieure de réfrigération (21) comprenant un compresseur de réfrigération (21a), et un dispositif de réfrigération (22A) raccordé à l'unité extérieure de réfrigération (21) par l'intermédiaire d'un tuyau (23) et configurée pour refroidir une cible de refroidissement ; et
un dispositif de commande de fonctionnement (30) configuré pour commander un fonctionnement de l'appareil de climatisation (10) et de l'appareil de réfrigération (20),
le dispositif de commande de fonctionnement (30) comprenant
une unité de surveillance de fonctionnement (31) configurée pour acquérir une consommation de puissance de l'appareil de climatisation (10) et une consommation de puissance de l'appareil de réfrigération (20),
une unité de prédiction de pic (32) configurée pour prédire un moment de pic auquel une somme de la consommation de puissance de l'appareil de climatisation (10) et de la consommation de puissance de l'appareil de réfrigération (20) est maximale, et un pic de consommation de puissance, la consommation de puissance de l'appareil de climatisation (10) et la consommation de puissance de l'appareil de réfrigération (20) étant acquises par l'unité de surveillance de fonctionnement (31),
une unité de commande de fonctionnement (33),
**caractérisée en ce que** l'unité de commande de fonctionnement (33) est configurée pour commander l'appareil de réfrigération (20) pour réaliser une opération de refroidissement du dispositif de réfrigération (22A) avant le moment de pic prédit par l'unité de prédiction de pic (32), et réaliser une opération de dégivrage du dispositif de réfrigération (22A) à un moment avant le moment de pic et avant l'opération de refroidissement.

2. Installation de complexe de climatisation et réfrigération selon la revendication 1, dans laquelle l'unité de commande de fonctionnement (33) est configurée pour
réduire la fréquence de fonctionnement du compresseur de climatisation (11a) au moment de pic, et
réaliser une commande dans un ordre de priorité consistant à réaliser une opération de réduction de la fréquence de fonctionnement du compresseur de climatisation (11a),
décaler l'opération de dégivrage du dispositif de réfrigération (22A) à un moment avant le moment de pic et réaliser l'opération de dégivrage, et
réaliser une opération de refroidissement du dispositif de réfrigération (22A) avant le moment de pic.

3. Installation de complexe de climatisation et réfrigération selon l'une quelconque des revendications 1 ou 2, dans laquelle l'unité de prédiction de pic (32) est configurée pour
prédire le moment de pic dans une journée en cours à partir de la consommation de puissance de l'appareil de climatisation (10) et de la consommation de puissance de l'appareil de réfrigération (20) dans une journée précédente.

4. Installation de complexe de climatisation et réfrigération selon l'une quelconque des revendications 1 à 3, comprenant en outre un watt-heuremètre (2) configuré pour mesurer la consommation de puissance de l'appareil de climatisation (10) et la consommation de puissance de l'appareil de réfrigération (20), l'unité de surveillance de fonctionnement (31) étant configurée pour acquérir la consommation de puissance de l'appareil de climatisation (10) et la consommation de puissance de l'appareil de réfrigération (20) à partir de la consommation de puissance mesurée par le watt-heuremètre (2).

5. Installation de complexe de climatisation et réfrigération selon l'une quelconque des revendications 1 à 3,
dans laquelle l'unité de surveillance de fonctionnement (31) est configurée pour acquérir la consommation de puissance à partir d'états de fonctionnement de l'appareil de climatisation (10) et de l'appareil de réfrigération (20).

6. Installation de complexe de climatisation et réfrigération comprenant :
un appareil de climatisation (10) comprenant une unité extérieure de climatisation (11) comprenant un compresseur de climatisation (11a), et une unité intérieure (12A) raccordée à l'unité extérieure de climatisation (11) par l'intermédiaire d'un tuyau (13) et configurée pour réaliser une climatisation d'un espace cible de climatisation ;
un appareil de réfrigération (20) comprenant une unité extérieure de réfrigération (21) comprenant un compresseur de réfrigération (21a), et un dispositif de réfrigération (22A) raccordé à l'unité extérieure de réfrigération (21) par l'intermédiaire d'un tuyau (23) et configurée pour refroidir une cible de refroidissement ; et
un dispositif de commande de fonctionnement (30) configuré pour commander un fonctionnement de l'appareil de climatisation (10) et de l'appareil de réfrigération (20), le dispositif de commande de fonctionnement (30) comprenant
une unité de surveillance de fonctionnement (31) configurée pour acquérir une consommation de puissance de l'appareil de climatisation (10) et une consommation de puissance de l'appareil de réfrigération (20),
une unité de prédiction de pic (32) configurée pour prédire un moment de pic auquel une somme de la consommation de puissance de l'appareil de climatisation (10) et de la consommation de puissance de l'appareil de réfrigération (20) est maximale, et un pic de consommation de puissance, la consommation de puissance de l'appareil de climatisation (10) et la consommation de puissance de l'appareil de réfrigération (20) étant acquises par l'unité de surveillance de fonctionnement (31), et
une unité de commande de fonctionnement (33),
**caractérisée en ce que** l'unité de commande de fonctionnement (33) est configurée pour commander l'appareil de réfrigération (20) pour
réaliser l'opération de refroidissement du dispositif de réfrigération (22A) avant le moment de pic prédit par l'unité de prédiction de pic (32), et
réaliser une opération de dégivrage du dispositif de réfrigération (22A) à un moment après le moment de pic.
